# EUROPEAN PATENT SPECIFICATION

(11) **EP 3 079 489 B1**
(45) Date of publication and mention of the grant of the patent: **01.08.2018**
(21) Application number: 14802635.4
(22) Date of filing: 21.11.2014
(51) Int. Cl.: A23G 9/04, A23G 9/22, A23G 9/26, A23G 9/44, A23G 9/48

(54) **PROCESS FOR SHAPING A FROZEN CONFECTIONERY PRODUCT**
VERFAHREN ZUR FORMGEBUNG VON GEFRORENEN SÜSSWAREN
PROCÉDÉ DE MISE EN FORME D'UN PRODUIT DE CONFISERIE SURGELÉE

(30) Priority: 13.12.2013 EP 13197079
(43) Date of publication of application: 19.10.2016
(73) Proprietor: Unilever NV, 3013 AL Rotterdam (NL); Unilever PLC, London EC4Y 0DY (GB)
(72) Inventor: CHENEY, Paul, Edward, Sharnbrook Bedfordshire MK44 1LQ (GB); KLINHOM, Sakchai, Bangkok 10900 (TH); MANOPAKARAT, Visit, Bangkok 10900 (TH)
(74) Representative: Turner, Felicity Margaret Mary
(86) International application number: PCT/EP2014/075282
(87) International publication number: WO 2015/086297

(56) References cited:
- EP-A1- 2 071 963
- EP-A1- 2 586 316
- EP-A2- 0 784 934
- WO-A1-01/30175
- WO-A2-2012/156539
- JP-A- 2003 219 803
- US-A- 4 986 080
- US-A- 5 343 710

## Description

### Field of the invention

The present invention is in the field of ice cream shaping, in particular it is relating to a process for shaping a frozen confectionery product comprising a core of frozen confection and a gel outer layer; wherein the gel layer comprises an indentation caused by ridges of a mould.

### Background of the invention

Consumers (especially children) are always looking for frozen confectionery products which provide interesting eating experiences. Products that provide a new shape or appearance are always appreciated. However, it is a constant challenge in the art to find new ways to shape frozen confectionery products.

Products consisting of a core of frozen confection with a jelly-like coating have been known for some years, for example as described in WO01/30175 and US 3 752 678. CN 101120714A discloses a variation on this in which the jelly coating can be peeled off the frozen confection core, in a manner similar to that of peeling the skin off a piece of fruit. However, it can be difficult to peel the jelly coating away from the frozen confection core without part of the coating sticking to the core and / or the coating breaking up into small pieces.

Similarly, frozen confectionery consisting of an inner core of one confection and an outer shell of another confectionery such as a gel have been proposed before. Alternatively the "twister" ice cream by Unilever is a popular example of a frozen confectionery product having distinct confectionery types in a product.

A more recent example of frozen confectionery products with distinct phases are frozen confectionery products comprising of an inner core of typically ice cream or water ice and an outer layer of gel that can be peeled off the core. One example for such a peelable frozen confectionery product is disclosed in WO2012/156539 and WO2012/156538 (NESTEC S.A.). This type of process first requires a mould for making a frozen confectionery product and then a second mould for shaping the product; the second mould being a cutting or shaping mould. This adds complexity to the process and a single moulding process for making a peelable frozen confectionery remains to be desired. Another drawback of this system is that the cutting depth needs to be controlled very well and the process requires high precision equipment to ascertain the correct alignment of the product before cutting, which again adds complexity to the process.

The cutting lines in peelable frozen confectionery products as proposed in the art that are currently made by knives on moulds can leave distorted edges on the frozen confectionery product, especially on the sides of the product where typically two mould with knives meet the cuts show distorted material around the cutting line. Incorrect or poorly aligned cuts result into products that cannot be easily peeled by the consumer.

An example of the use of a knife or cutting tool for cutting lines in peelable frozen confectionery products is disclosed in EP 2 586 316 A1.

One way of avoiding coarse looking cutting lines is the use of a shaping tool that melts away some frozen confection in order to make a more appealing line, such as disclosed in our co-pending application PCT/CN2013/084058.

However there is still a need for a process for shaping a frozen confection product comprising a core of frozen confection and a gel outer layer; wherein the gel layer comprises an indentation caused by ridges of a mould without the need for a separate tool or device for making peeling lines, grooves or other cuts.

### Summary of the invention

A process for shaping a frozen confectionery product comprising a core of frozen confection and a gel outer layer; wherein the gel layer comprises an indentation caused by ridges of a mould; the process comprising the steps of either: filling the mould comprising a container having a closed bottom section, an open top section, and a middle section; the middle section comprising at least one inwardly protruding ridge with a first composition, comprising a gelling agent, leaving the composition to solidify against the wall of the container until at least 1 mm has solidified against the wall, emptying remaining material from the mould, filling the mould with a second composition, leaving the material to solidify completely, and removing the solidified product from the mould; or: filling the mould comprising a container having a closed bottom section, an open top section, and a middle section; the middle section comprising at last one inwardly protruding ridge with a first composition, comprising a gelling agent, inserting a counter mould, leaving the composition to solidify against the wall of the container until at least 1 mm has solidified against the wall, removing the counter mould, filling the mould with a second composition, leaving the material to solidify completely, and removing the solidified product from the mould; or: filling the mould comprising a container having a closed bottom section, an open top section, and a middle section; the middle section comprising at least one inwardly protruding ridge with a first composition, comprising gelling agent, inserting a pre-formed frozen core, leaving the material to solidify completely, and removing the solidified product from the mould.

By "peelable" is meant that an outer layer of the confectionery product may be removed by hand.

### Brief description of the figures

Figure 1 shows a single mould.
Figure 2 shows a set of 4 moulds.
Figure 3 shows an improved filling nozzle for the mould.

### Detailed description of the invention

A process for shaping a frozen confectionery product comprising a core of frozen confection and a gel outer layer; wherein the gel layer comprises an indentation caused by ridges of a mould; the process comprising the steps of either: filling the mould comprising a container having a closed bottom section, an open top section, and a middle section; the middle section comprising at least one inwardly protruding ridge with a first composition, comprising a gelling agent, leaving the composition to solidify against the wall of the container until at least 1 mm has solidified against the wall, emptying remaining material from the mould, filling the mould with a second composition, leaving the material to solidify completely, and removing the solidified product from the mould; or: filling the mould comprising a container having a closed bottom section, an open top section, and a middle section; the middle section comprising at last one inwardly protruding ridge with a first composition, comprising a gelling agent, inserting a counter mould, leaving the composition to solidify against the wall of the container until at least 1 mm has solidified against the wall, removing the counter mould, filling the mould with a second composition, leaving the material to solidify completely, and removing the solidified product from the mould; or: filling the mould comprising a container having a closed bottom section, an open top section, and a middle section; the middle section comprising at least one inwardly protruding ridge with a first composition, comprising gelling agent, inserting a pre-formed frozen core, leaving the material to solidify completely, and removing the solidified product from the mould.

Wherein the mould comprises a container having a closed bottom section, an open top section, and a middle section; the middle section being tapered such that the circumference of the of the middle section at the point where it meets the bottom section is at least 0.5% less than the circumference at the top of the middle section; the middle section comprising at least one inwardly protruding ridge.

The mould is preferably tapered to allow for easier removal of the frozen confection after moulding. The tapering of the middle section preferably being tapered such that the circumference of the of the middle section at the point where it meets the bottom section is at least 0.5% less than the circumference at the top of the middle section, preferably at least 1%, more preferably at least 2%, still more preferably at least 3%, or even at least 5%, but typically less than 50%, more preferably not more than 40%, still more preferably not more than 30%, even more preferably not more than 20%, even still more preferably not more than 10% or even not more than 6%.

The mould may be made from any commonly used material. The mould is preferably made of food safe materials. Preferred materials are metals, ceramic materials and plastics, such as low density or high density polyethylene. Preferred metals include, but are not limited to, metals and alloys such as stainless steel, brass, aluminium, titanium.

The total volume of the container is preferably between 10 and 200 ml, more preferably at least 20 ml, still more preferably at least 30 ml, or even at least 40 ml, while the container is preferably not more than 180 ml, still more preferably not more than 160 ml, or even not more than 140 ml.

Although the use of the mould in the process of the invention is a technical feature of the invention, the mould *per se* does not fall within the scope of the invention.

### Ridge

The ridge is preferably comprising of 2 sides, the sides preferably being joined together at an angle of not more than 120° in the middle and the other outer edges of the sides being joined to the container wall; preferable not more than 90° or even not more than 75°.

For the avoidance of doubt, the ridge comprises of 2 sides, each side being in the shape of a strip, each strip having to long sides and 2 short sides. Two of the long sides are joined together at the angle as mentioned above. The short sides on the top end of the middle section are open; the short sides at the bottom are connected to the bottom section.

Ideally the ridge forms an integral part of the container wall, but embodiments where the ridge is joined with the outer wall of the middle section are also contemplated; this further includes solidly filled ridges. In a preferred embodiment the ridge is part of the container wall; especially when the outer wall of the mould is briefly heated prior to de-moulding the frozen confectionery from the mould.

In a preferred embodiment the ridge extends from the top of the opening of the container all the way the bottom of the container. In the case of more than one ridge being used, this results in the ridges being joined together in the bottom section of the container.

The ridge typically protrudes inwardly for at least 1 mm. By protruding inwardly is meant protruding from the container wall inwardly, preferably towards the centre axis the container. The ridge is preferably protruding inwardly at least 1.5 mm, more preferably at least 2 mm, still more preferably 2.5 mm, or even at least 3 mm; but typically not more than 10 mm, more preferably not more than 8 mm, still more preferably not more than 6 mm.

The mould may contain more than one ridge. Preferably the mould according to the invention comprises at least 2 ridges, preferably at least 3 ridges, more preferably at least 4 ridges, but typically not more than 10 ridges, still more preferably not more than 8 ridges, or even not more than 6 ridges.

### Shape

The mould may be a single piece, but a mould comprising two halves or more parts that are connected together is also contemplated. When the mould is a single piece the shape is limited. In the most basic operation a single piece mould provided with lengthwise ridges, generally provides a banana type peelable frozen confectionery, due to the limitations of demoulding. However, a single piece mould with spiral ridges and a system that turns the confectionery during demoulding could still provide a spiral peel on the confectionery product.

However, when the mould comprises of more parts that are held together during moulding, different shapes are also possible, including a spiral peel, as the mould can be opened into two or more parts for demoulding then. In the case of moulds comprising of more than one part, the mould does not require tapering for easier demoulding, but can be any shape.

### Process

In a preferred embodiment, the process for shaping a frozen confectionery product comprising a core of a frozen confection and a gel outer layer; wherein the gel layer comprises an indentation caused by ridges of a mould, comprises the steps of: cooling the mould, filling the mould with a first composition, leaving the composition to solidify against the wall of the container until at least 1 mm has solidified against the wall, emptying remaining material from the mould, filling the mould with a second composition, and leaving the material to solidify completely, and removing the solidified product from the mould.

### Outer layer

In the context of the invention, the terms: 'gel outer layer', 'gel layer', 'outer layer' and 'layer' are interchangeable.

The outer layer is prepared by filling the mould with a composition for the outer layer of the frozen confectionery product. The mould may be cooled down before filling with the composition of the outer layer or after or both, preferably the mould is cooled down before the outer layer composition is added and is continuously cooled during the whole process until the confectionery of solidified. The outer layer composition then solidified against the outer wall of the container. Ideally the layer is at least 1 mm thick, preferably at least 2 mm, or even at least 3 mm thick, but preferably not more than 10 mm, more preferably not more than 8mm, still more preferably not more than 5 mm. In a preferred embodiment the outer layer has a thickness that is the same as the depth of the ridge, plus or minus 50%, more preferably plus or minus 30%, still more preferably plus or minus 20%, even more preferably plus or minus 10%.

Without wishing to be bound to a theory, we have found that this way of filling mould with the composition of the outer layer and letting it solidify against the outer wall, yields an outer layer that has a substantially homogeneous thickness in the parts between the ridge, but has a substantially lesser thickness over the ridges. Again without wishing to be bound by a theory, it is thought that this reduced thickness provides for the easier peelability.

When the outer layer is thick enough, the remaining liquid composition is removed from the mould. This may be done by sucking the remaining liquid out, or by turning the mould upside down. Other conventional ways of removing excess liquid from the mould are also contemplated.

Alternatively, the outer layer may be produced by at least partially filling the mould with the liquid outer layer composition, and inserting a counter mould inside the mould according to the invention, thereby displacing the outer layer composition such that it fills the space between the mould of the invention and the counter mould. The counter mould would then be left in place until the outer layer is frozen. By partially filling is meant filling with an amount of outer layer composition suitable for forming a outer layer.

The use of a pre-formed frozen core material as counter mould is also contemplated. In that case, the core acting as counter mould need not be removed after freezing the core.

### Filling nozzle

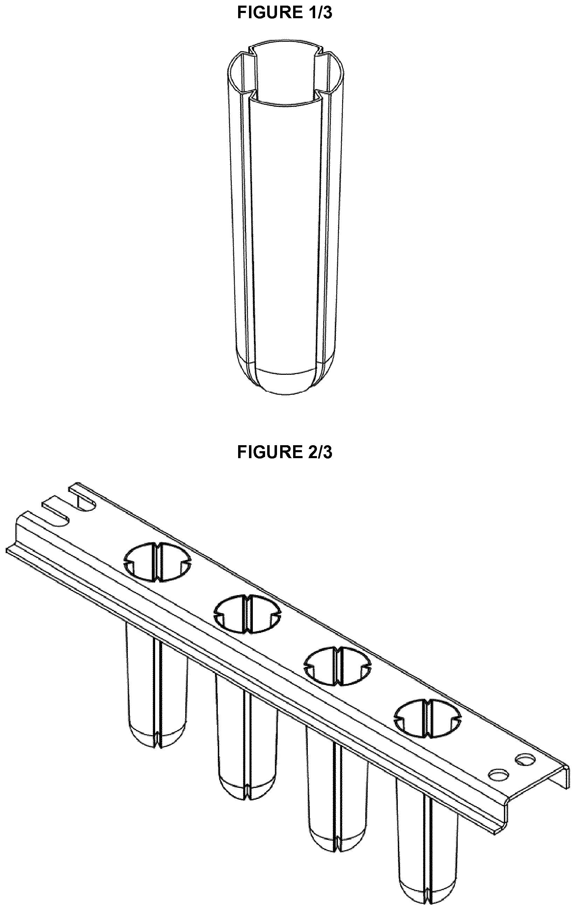

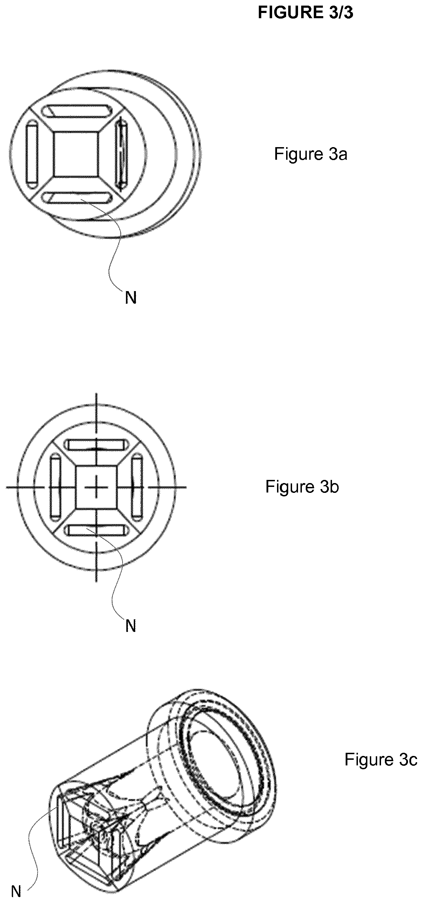

In a preferred embodiment the mould may be filled by an improved nozzle that comprises multiple outlets. Ideally the number of outlets corresponds with the number of ridges. The outlets of the nozzle, while in operation, are ideally aimed towards the sections between the ridges of the container. One embodiment of such a nozzle is depicted in Figure 3. The filling nozzle of figure 3, comprises 4 exit nozzles to match the 4 sections of figure 1. Nozzles assemblies with a different number of exit nozzles to match with a different number of section in a mould, are also contemplated. The nozzle may comprise between 3 and 8 exit nozzles, typically between 3 and 5.

This improved nozzle is ideally used for filling the mould with the outer layer composition.

However, the mould may also be filled with conventional filling nozzles.

### Core

The core composition is preferably pre-cooled to avoid that the outer layer is dissolved when the core composition is added. The core composition is preferably cooled to a temperature of less than 15°C, more preferably not more than 10°C, still more preferably nor more than 5°C, even more preferably below 2°C, or even below 1°C.

The core composition is then left to solidify inside the mould.

A stick may be added before the core composition is solidified or after, or at any time between adding the core composition to the mould and completion of the solidification.

### Demoulding

In a preferred embodiment, prior to demoulding the mould is briefly heated. Without wishing to be bound by a theory it is thought that heating the mould prior to demoulding may cause the mould to slightly expand, making demoulding easier, and/or melt an outer film of the frozen confectionery product that allows for easier removal of the product. Ideally the mould is heated for at least 1 second, preferably at least 2 seconds, or even at least 5 seconds, but typically less than a minute.

The heating may be done in any conventional may, for instance, the mould may be placed in a hot aqueous solution or the mould may be heated by a water jacket, or even by electricity. When heated with water, the water is preferably at least 5°C, more preferably at least 10°C, still more preferably at least 15°C, or even at least 20°C, but preferably less than 100°C, more preferably not more than 80°C, still more preferably not more than 70°C, or even not more than 60°C or even not more than 50°C.

### Frozen confection

The frozen confection prepared according to the process of the present invention comprises a core comprising conventional frozen confection and an outer layer (shell) of a gel layer.

Although frozen confection is prepared according to the process of the present invention, the frozen confection *per se* is not intended to fall within the scope of the invention.

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003 and "The Science of Ice Cream", C.J. Clarke, Royal Society of Chemistry, Cambridge, 2004.

### Core

Frozen confections are sweet-tasting fabricated foodstuffs intended for consumption in the frozen state (i.e. under conditions wherein the temperature of the foodstuff is less than 0°C, and preferably under conditions wherein the foodstuff comprises a significant amount of ice). Frozen confections include water ices and fruit ices, which comprise water and one or more of sugars, stabilisers, colours and flavours, but little or no fat or protein (e.g. less than 5 wt% of each, preferably less than 2 wt%). Frozen confections also include ice creams, frozen yoghurts, sorbets and the like.

### Outer Layer (Shell) of a get layer

The core of the frozen confection may be partially or completely covered with a layer of a gel. It is preferred that at least the top and the sides are covered, but preferably also the bottom of the product. The product may be produced by means of a fill and suck process in a mould wherein a gel mix is filled into a mould, the core sucked out and then re-filled with frozen confection. In a preferred embodiment, the core is substantially covered by a layer of gel, and scores or notches are present in the gel layer. The scores / notches allow easy peeling of strips of the gel layer, for example in a similar manner to peeling a banana or a spiral peel. The scores / notches are formed when the fill and suck method is used, by using a mould with suitable indentations.

The gel layer may be formed from a mix which contains a gelling agent. The gelling agent may be a thermoreversible gelling biopolymer such as gelatine or agar. Alternatively the gelling agent may be a chemically setting gelling biopolymer which derives its gel structure from an interaction between the biopolymer and an appropriate ion such as Ca2+. Examples include sodium alginate, iota- carrageenan, kappa-carrageenan and pectin. The gelling agent could also be a synergistic combination of two or more biopolymers that may be individually non-gelling, but on mixing will form a gel or a gel of a higher modulus. Examples include: sodium alginate with pectin, xanthan with locust bean gum, agar with locust bean gum, and kappa carrageenan with locust bean gum. The gelling agent is present in an amount such that the gel is sufficiently strong to for the gel layer to cohere so that it does not break apart too easily during peeling. The gel strength can be increased by increasing the amount of the gelling agent in the mix.

The gel may be formed by lowering the temperature (for thermally setting gelling agents) or by combining two separate mix streams, each of which contains one of the components of a chemically setting gelling agent. For example, the mix may be made in two parts, one containing sodium alginate and the other containing a source of Ca2+ions. When the two mixes are combined in the mould, the alginate reacts with the Ca2+ to form the gel.

### Peel

The frozen confectionery product prepared according to the process of the present invention comprises a core of frozen confection and a gel outer layer; wherein the gel layer comprises an indentation caused by the ridges of the mould.

Preferably the product comprises notches for easier peeling.

The peel experience of the product according to the invention is more intense due to the clearer peel lines and the easier peeling and more appealing appearance caused by the indentation.

### Detailed description of the figures

Figure 1 shows a single mould. The mould is made as a single piece and has 4 ridges on the side, protruding inwardly towards the centre of the mould and runs over the full length of the mould.

Figure 2 shows a set of 4 moulds. The 4 moulds are joined together at the top end.

Figure 3 shows a filling nozzle assembly for filling the mould of the invention. Figure 3a shows a perspective view of the exit part of the nozzle, comprising 4 exit nozzles (N). Figure 3b shows a direct front view of the same nozzle, again having 4 exit nozzles (N). Figure 3c is a see through perspective from the filling side of the filling nozzle.

### Examples

### Example1: Preparing banana peel ice cream ridged mould.

The product of this example comprises of an ice cream core and peelable layer of a frozen jelly.

### Icecream core ingredients and preparation of the composition

Sugars 14%
Skimmed milk powder 5%
Coconut oil 4%
Corn syrup 10%
Flavour and colour 0.12%
Stabilizer 0.3%
Water 62.58%

The ice-cream core composition was prepared as follows. The water was heated to 60°C. Then sugar, stabilizer, milk powder, whey powder and oil were slowly added to the tank under agitation to ensure even dispersion of these ingredients. The resulting mixture was pasteurized at 70°C for 20 minutes and homogenised before cooling down the composition to 4°C and age for 24h.

### Shell ingredients (jelly) and preparation of the iellv composition

Sugars 27%
Corn syrup 40DE 15%
Fruit juice 2%
Gums 0.6%
Citrate acid 0.5%
Flavour and colour 0.12%
Water 54.78%

The Jelly composition (outer layer) was prepared by heating the water to 85°C and adding part of the sugar and the stabilizer at the ratio of 10:1. The mixture was then mixed for 2 minutes, before adding the remaining sugars and syrups. This mixture was stirred for 10 minutes. The other (minor) ingredients (citric acid, sodium citrate, etc. except the flavour ingredient) were added, followed by the colour ingredient. This composition was stirred at 65°C for 2 minutes and pasteurized at 81 °C for 30sec. Then the flavour was added after pasteurization.

The frozen confectionery product was made by pouring 51ml of liquid jelly composition (at 55°C) into a frozen mould according to the invention. The Jelly was given time to freeze against the mould walls, to form a jelly layer of approximately 3 mm before sucking out the excess liquid jelly composition. This forms the jelly layer shell. The liquid ice-cream composition of the core was added inside the jelly core and frozen in the mould. A stick was inserted and the layered ice-cream product was demoulded.

The products were provided with nicely formed indentations cause by the ridged mould and provided for excellent and easy peelability of the product.

## Claims

1. A process for shaping a frozen confectionery product comprising a core of frozen confection and a gel outer layer; wherein the gel layer comprises an indentation caused by ridges of a mould; the process comprising the steps of either:
a Filling the mould comprising a container having a closed bottom section, an open top section, and a middle section; the middle section comprising at least one inwardly protruding ridge with a first composition, comprising a gelling agent,
b Leaving the composition to solidify against the wall of the container until at least 1 mm has solidified against the wall,
c Emptying remaining material from the mould,
d Filling the mould with a second composition,
e Leaving the material to solidify completely, and
f Removing the solidified product from the mould;
or:
a Filling the mould comprising a container having a closed bottom section, an open top section, and a middle section; the middle section comprising at least one inwardly protruding ridge with a first composition, comprising a gelling agent,
b Inserting a counter mould
c Leaving the composition to solidify against the wall of the container until at least 1 mm has solidified against the wall,
d Removing the counter mould
e Filling the mould with a second composition,
f Leaving the material to solidify completely, and
g Removing the solidified product from the mould;
or:
a Filling the mould comprising a container having a closed bottom section, an open top section, and a middle section; the middle section comprising at least one inwardly protruding ridge with a first composition, comprising a gelling agent,
b Inserting a pre-formed frozen core,
c Leaving the material to solidify completely, and
d Removing the solidified product from the mould **characterised in that** the first composition comprises a gelling agent.

2. A process according to claim 1, wherein the mould is cooled down before step (a), after step (a), or both.

3. A process according to anyone of claims 1 or 2, wherein the first composition is filled into the mould with a nozzle that comprising multiple outlets

4. A process according to claim 3, wherein the number of outlets of the nozzle corresponds with the number of ridges of the mould; and wherein the outlets of the nozzle, while in operation, are aimed towards the sections between the ridges of the container.

5. A process according to anyone of the preceding claims, wherein the mould is heated to a temperature of at least 20°C more than the temperature of the solidified product for at least 1 second.

6. A process according to any one of the preceding claims, wherein in the mould the middle section is tapered, such that the circumference of the middle section at the point where it meets the bottom section is at least 0.5% less than the circumference at the top of the middle section.

7. A process according to any one of the preceding claims, wherein in the mould the ridge is comprising 2 sides, the sides being joined together at an angle of not more than 120° in the middle and the other outer edges of the sides being joined to the container wall;

8. A process according to any one of the preceding claims, wherein in the mould the ridge is part of the container wall.

9. A process according to any one of the preceding claims, wherein in the mould the ridge protrudes inwardly for at least 1 mm.

10. A process according to any one of the preceding claims, wherein the mould comprises at least 2 ridges, preferably at least 3 ridges, more preferably at least 4 ridges.

11. A process according to any one of the preceding claims, wherein the gelling agent may be a thermoreversible gelling biopolymer or a chemically setting gelling biopolymer or mixtures thereof.

12. A process according claim 11, wherein the gelling agent is a thermoreversible gelling biopolymer selected from gelatine or agar

13. A process according claim 11, wherein the gelling agent is a chemically setting gelling biopolymer selected from sodium alginate, iota- carrageenan, kappa-carrageenan and pectin.

## Patentansprüche

1. Verfahren zur Formgebung von gefrorenen Süßwaren, umfassend einen Kern aus gefrorener Süßware und eine äußere Gelschicht; wobei die Gelschicht eine durch Rippen einer Form verursachte Einkerbung umfasst; wobei das Verfahren die folgenden Schritte umfasst:
entweder
a) Füllen der Form, die einen Behälter umfasst, der einen Abschnitt mit geschlossenem Boden, einen offenen oberen Abschnitt und einen mittleren Abschnitt aufweist; wobei der mittlere Abschnitt zumindest eine nach innen ragende Rippe umfasst, mit einer ersten Zusammensetzung, die ein Geliermittel umfasst,
b) Verfestigen der Zusammensetzung an der Wand des Behälters, bis sich zumindest 1 mm an der Wand verfestigt hat,
c) Entleeren von übrigem Material aus der Form,
d) Füllen der Form mit einer zweiten Zusammensetzung,
e) vollständiges Verfestigen des Materials und
f) Entfernen des verfestigten Produktes aus der Form;
oder:
a) Füllen der Form, die einen Behälter umfasst, der einen Abschnitt mit geschlossenem Boden, einen offenen oberen Abschnitt und einen mittleren Abschnitt aufweist; wobei der mittlere Abschnitt zumindest eine nach innen ragende Rippe umfasst, mit einer ersten Zusammensetzung, die ein Geliermittel umfasst,
b) Einsetzen einer Gegenform,
c) Verfestigen der Zusammensetzung an der Wand des Behälters, bis sich zumindest 1 mm an der Wand verfestigt hat,
d) Entfernen der Gegenform,
e) Füllen der Form mit einer zweiten Zusammensetzung,
f) vollständiges Verfestigen des Materials und
g) Entfernen des verfestigten Produktes aus der Form;
oder:
a) Füllen der Form, die einen Behälter umfasst, der einen Abschnitt mit geschlossenem Boden, einen offenen oberen Abschnitt und einen mittleren Abschnitt aufweist, wobei der mittlere Abschnitt zumindest eine nach innen ragende Rippe umfasst, mit einer ersten Zusammensetzung, die ein Geliermittel umfasst,
b) Einsetzen eines vorgeformten gefrorenen Kerns,
c) vollständiges Verfestigen des Materials und
d) Entfernen des verfestigten Produktes aus der Form, **dadurch gekennzeichnet, dass** die erste Zusammensetzung ein Geliermittel umfasst.

2. Verfahren nach Anspruch 1, wobei die Form vor Schritt (a), nach Schritt (b) oder beidem gekühlt wird.

3. Verfahren nach irgendeinem der Ansprüche 1 oder 2, wobei die erste Zusammensetzung mit einer Düse, die mehrere Auslässe umfasst, in die Form gefüllt wird.

4. Verfahren nach Anspruch 3, wobei die Anzahl an Auslässen der Düse der Anzahl an Rippen der Form entspricht und wobei die Auslässe der Düse, während sie in Betrieb sind, in Richtung der Abschnitte zwischen den Rippen des Behälters gerichtet sind.

5. Verfahren nach irgendeinem der vorhergehenden Ansprüche, wobei die Form zumindest 1 Sekunde lang auf eine Temperatur von zumindest 20 °C mehr als die Temperatur des verfestigten Produktes erwärmt wird.

6. Verfahren nach irgendeinem der vorhergehenden Ansprüche, wobei der mittlere Abschnitt in der Form verjüngt ist, sodass der Umfang des mittleren Abschnitts an dem Punkt, an dem er mit dem Bodenabschnitt zusammentrifft, um zumindest 0,5 % geringer als der Umfang an der Oberseite des mittleren Abschnitts ist.

7. Verfahren nach irgendeinem der vorhergehenden Ansprüche, wobei die Rippe in der Form 2 Seiten umfasst, wobei die Seiten in einem Winkel von nicht mehr als 120° in der Mitte miteinander verbunden sind und die anderen Außenkanten der Seiten mit der Behälterwand verbunden sind.

8. Verfahren nach irgendeinem der vorhergehenden Ansprüche, wobei die Rippe in der Form Teil der Behälterwand ist.

9. Verfahren nach irgendeinem der vorhergehenden Ansprüche, wobei die Rippe in der Form zumindest 1 mm nach innen ragt.

10. Verfahren nach einem der vorhergehenden Ansprüche, wobei die Form zumindest 2 Rippen, bevorzugt zumindest 3 Rippen, bevorzugter zumindest 4 Rippen umfasst.

11. Verfahren nach irgendeinem der vorhergehenden Ansprüche, wobei das Geliermittel ein thermoreversibles Gelierbiopolymer oder ein chemisch abbindendes Gelierbiopolymer oder Mischungen davon sein kann.

12. Verfahren nach Anspruch 11, wobei das Geliermittel ein thermoreversibles Gelierbiopolymer ist, das aus Gelatine oder Agar ausgewählt ist.

13. Verfahren nach Anspruch 11, wobei das Geliermittel ein chemisch abbindendes Gelierbiopolymer ist, das aus Natriumalginat, Iota-Carrageen, Kappa-Carrageen und Pektin ausgewählt ist.

## Revendications

1. Processus de mise en forme d'un produit de confiserie surgelé comprenant un coeur en friandise surgelée et une couche extérieure de gel ; dans lequel la couche de gel comprend une indentation provoquée par les nervures d'un moule ; le processus comprenant les étapes consistant à :
a Remplir le moule comprenant un conteneur ayant une section inférieure fermée, une section supérieure ouverte, et une section intermédiaire ; la section intermédiaire comprenant au moins une nervure dépassant vers l'intérieur avec une première composition, comprenant un agent gélifiant,
b Laisser la composition se solidifier contre la paroi du conteneur jusqu'à ce qu'au moins 1 mm se soit solidifié contre la paroi,
c Vider la substance restante du moule,
d Remplir le moule avec une seconde composition,
e Laisser la substance se solidifier complètement, et
f Retirer le produit solidifié du moule ;
ou :
a Remplir le moule comprenant un conteneur ayant une section inférieure fermée, une section supérieure ouverte, et une section intermédiaire ; la section intermédiaire comprenant au moins une nervure dépassant vers l'intérieur avec une première composition, comprenant un agent gélifiant,
b Insérer un contre-moule
c Laisser la composition se solidifier contre la paroi du conteneur jusqu'à ce qu'au moins 1 mm se soit solidifié contre la paroi,
d Retirer le contre-moule
e Remplir le moule avec une seconde composition,
f Laisser la substance se solidifier complètement, et
g Retirer le produit solidifié du moule ;
ou :
a Remplir le moule comprenant un conteneur ayant une section inférieure fermée, une section supérieure ouverte, et une section intermédiaire ; la section intermédiaire comprenant au moins une nervure dépassant vers l'intérieur avec une première composition, comprenant un agent gélifiant,
b Insérer un coeur surgelé préformé,
c Laisser la substance se solidifier complètement, et
d Retirer le produit solidifié du moule **caractérisé en ce que** la première composition comprend un agent gélifiant.

2. Processus selon la revendication 1, dans lequel le moule est refroidi avant l'étape (a), après l'étape (a), ou les deux.

3. Processus selon l'une quelconque des revendications 1 ou 2, dans lequel la première composition est placée dans le moule avec une buse qui comprend plusieurs évacuations.

4. Processus selon la revendication 3, dans lequel le nombre d'évacuations de la buse correspond au nombre de nervures du moule ; et dans lequel les évacuations de la buse, pendant le fonctionnement, sont orientées vers les sections entre les nervures du conteneur.

5. Processus selon l'une quelconque des revendications précédentes, dans lequel le moule est chauffé à une température au moins 20°C supérieure à la température du produit solidifié pendant au moins 1 seconde.

6. Processus selon l'une quelconque des revendications précédentes, dans lequel, dans le moule, la section intermédiaire est effilée, de sorte que la circonférence de la section intermédiaire au point auquel elle rencontre la section inférieure soit au moins 0,5 % inférieure à la circonférence en haut de la section intermédiaire.

7. Processus selon l'une quelconque des revendications précédentes, dans lequel, dans le moule, la nervure comprend 2 côtés, les côtés étant joints ensemble à un angle non supérieur à 120° au milieu, et les autres côtés extérieurs des côtés étant joints à la paroi du conteneur.

8. Processus selon l'une quelconque des revendications précédentes, dans lequel, dans le moule, la nervure fait partie de la paroi du conteneur.

9. Processus selon l'une quelconque des revendications précédentes, dans lequel, dans le moule, la nervure dépasse vers l'intérieur sur au moins 1 mm.

10. Processus selon l'une quelconque des revendications précédentes, dans lequel le moule comprend au moins 2 nervures, de préférence au moins 3 nervures, de préférence au moins 4 nervures.

11. Processus selon l'une quelconque des revendications précédentes, dans lequel l'agent gélifiant peut être un biopolymère gélifiant thermoréversible ou un biopolymère gélifiant à durcissement chimique ou des mélanges de ceux-ci.

12. Processus selon la revendication 11, dans lequel l'agent gélifiant est un biopolymère gélifiant thermoréversible choisi parmi de la gélatine ou de l'agar.

13. Processus selon la revendication 11, dans lequel l'agent gélifiant est un biopolymère gélifiant à durcissement chimique choisi parmi de l'alginate de sodium, de la iota carraghénane, de la kappa carraghénane, et de la pectine.
